# EUROPEAN PATENT APPLICATION

(11) **EP 4 787 640 A1**
(43) Date of publication of application: **05.08.2026**
(21) Application number: 24909578.7
(22) Date of filing: 12.06.2024
(51) Int. Cl.: H02B 1/26, H01M 50/20, B60L 3/00, B60L 50/60

(54) **BATTERY, VEHICLE-MOUNTED CONNECTING DEVICE, TOPOLOGY AND ELECTRICAL APPARATUS**

(30) Priority: 25.12.2023 CN 202323551354 U
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: LIN, Benfeng, Ningde, Fujian 352100 (CN); ZHANG, Jiantao, Ningde, Fujian 352100 (CN); YANG, Longjie, Ningde, Fujian 352100 (CN)
(74) Representative: Kraus & Lederer PartGmbB
(86) International application number: PCT/CN2024/098703
(87) International publication number: WO 2025/138616

(57) **Abstract**

A battery (100), a vehicle-mounted connecting apparatus (70), a topology framework (1000) and an electrical device are provided. The battery (100) includes a battery module (10) and a first control assembly (20), the first control assembly (20) being electrically connected to the battery module (10). The first control assembly (20) includes: a first case (201), a bus (ML), a first battery management unit (202), and a first voltage sampling module (203). The bus (ML), the first battery management unit (202) and the first voltage sampling module (203) are located in the first case (201); and the first voltage sampling module (203) is electrically connected to the bus (ML) and the first battery management unit (202), respectively. Embodiments of the present application can improve the degree of integration of the battery (100), thus helping to reduce the cost.

## Description

### CROSS-REFERENCE TO RELATED APPLICATIONS

The present application claims priority to Chinese patent application 202323551354.9 filed on December 25, 2023 and titled "BATTERY, VEHICLE-MOUNTED CONNECTING APPARATUS, TOPOLOGY FRAMEWORK, AND ELECTRICAL DEVICE", which is incorporated herein by reference in its entirety.

### TECHNICAL FIELD

The present application relates to the technical field of batteries, in particular, to a battery, a vehicle-mounted connecting apparatus, a topology framework, and an electrical device.

### BACKGROUND

As a power supply component of an electric vehicle, a battery plays a decisive role in the range, cost and lifespan of the entire vehicle. However, at present, the degree of integration of an internal circuit of the battery is relatively low, and the cost is relatively high.

### SUMMARY OF THE INVENTION

Embodiments of the present application provide a battery, a vehicle-mounted connecting apparatus, a topology framework, and an electrical device, which can improve the degree of integration of the battery, thereby helping to reduce the cost.

According to a first aspect, an embodiment of the present application provides a battery. The battery includes a battery module and a first control assembly. The first control assembly is electrically connected to the battery module. The first control assembly includes: a first case; a bus; a first battery management unit; and a first voltage sampling module. The bus, the first battery management unit and the first voltage sampling module are located in the first case. The first voltage sampling module is electrically connected to the bus and the first battery management unit respectively.

Based on the technical solutions of the embodiments of the present application, on the one hand, the bus, the first battery management unit and the first voltage sampling module are all integrated in the first case of the first control assembly, thereby helping to reduce the wiring harness length between the first voltage sampling module and the first battery management unit, and/or reduce the wiring harness length between the first voltage sampling module and the bus to reduce the wiring harness cost; and on the other hand, since the first battery management unit and the first voltage sampling module are both integrated in the first case of the first control assembly, the number of connectors between the first voltage sampling module and the first battery management unit can be reduced, so as to save the cost of using connectors, and help to reduce the risk of communication failure. Furthermore, by improving the degree of integration of the battery, it helps to reduce the volume of the battery and the space occupied by the battery.

According to an implementation of the first aspect of the present application, the battery module is electrically connected to the bus, the first control assembly further includes a first connector, and the bus and the first battery management unit are electrically connected to the first connector.

According to any of the above implementations of the first aspect of the present application, the first connector is disposed on the first case.

According to any of the above implementations of the first aspect of the present application, the first connector includes a main loop interface, a low-voltage interface, and a grounding interface; and the main loop interface is electrically connected to the bus, the low-voltage interface is electrically connected to the first battery management unit, and the grounding interface is electrically connected to a grounding terminal.

According to any of the above implementations of the first aspect of the present application, the low-voltage interface includes at least one of a communication interface, a first connector connection state detection interface, a first connector temperature state detection interface, and a position recognition signal interface.

According to any of the above implementations of the first aspect of the present application, the first control assembly further includes an adapter connector; and the first battery management unit is electrically connected to the first connector through the adapter connector.

According to any of the above implementations of the first aspect of the present application, the adapter connector includes a first adapter connector and a second adapter connector, and the first adapter connector is electrically connected to the second adapter connector; and the first battery management unit is electrically connected to the first adapter connector, and the first connector is electrically connected to the second adapter connector.

According to any of the above implementations of the first aspect of the present application, the first voltage sampling module includes a first power interface and a first communication interface, and the first battery management unit includes a first power supply interface and a second communication interface; and the first power interface is electrically connected to the first power supply interface, and the first communication interface is electrically connected to the second communication interface.

According to any of the above implementations of the first aspect of the present application, the first control assembly further includes a first networking module, the first networking module is located in the first case, and the first networking module is electrically connected to the first battery management unit.

According to any of the above implementations of the first aspect of the present application, the first networking module includes a second power interface and a third communication interface, and the first battery management unit includes a second power supply interface and a fourth communication interface; and the second power interface is electrically connected to the second power supply interface, and the third communication interface is electrically connected to the fourth communication interface.

According to any of the above implementations of the first aspect of the present application, the first control assembly further includes a positioning module, the positioning module is located in the first case, and the positioning module is electrically connected to the first battery management unit.

According to any of the above implementations of the first aspect of the present application, the first control assembly further includes a first battery connection interface and a second battery connection interface, the first battery connection interface is electrically connected to a first electrode of the battery module, and the second battery connection interface is electrically connected to a second electrode of the battery module; and the bus includes a first bus and a second bus, the first bus is electrically connected to the first battery connection interface, and the second bus is electrically connected to the second battery connection interface.

According to any of the above implementations of the first aspect of the present application, the battery includes N battery modules, the N battery modules are connected in series, and N is an integer greater than 1; and the first battery connection interface is electrically connected to a first electrode of the first battery module, and the second battery connection interface is electrically connected to a second electrode of the Nth battery module.

According to any of the above implementations of the first aspect of the present application, the battery includes N battery modules, the N battery modules are connected in parallel, and N is an integer greater than 1; and the first battery connection interface is electrically connected to first electrodes of the N battery modules, and the second battery connection interface is electrically connected to second electrodes of the N battery modules.

According to any of the above implementations of the first aspect of the present application, the first control assembly further includes a first main loop relay and a second main loop relay, and the first main loop relay and the second main loop relay are located in the first case; the main loop interface of the first connector includes a first main loop interface and a second main loop interface; and the first bus and the first main loop relay are connected between the first battery connection interface and the first main loop interface, and the second bus and the second main loop relay are connected between the second battery connection interface and the second main loop interface.

According to any of the above implementations of the first aspect of the present application, the battery further includes a cell supervision circuit, and the cell supervision circuit is electrically connected to the battery module and the first battery management unit respectively.

According to any of the above implementations of the first aspect of the present application, the first control assembly further includes a battery monitoring interface, and the cell supervision circuit is electrically connected to the first battery management unit through the battery monitoring interface.

According to any of the above implementations of the first aspect of the present application, the first control assembly further includes a first debugging and diagnosing interface, and the first debugging and diagnosing interface is electrically connected to the first battery management unit.

According to a second aspect, an embodiment of the present application provides a vehicle-mounted connecting apparatus. The vehicle-mounted connecting apparatus includes a wiring assembly and a second control assembly. The wiring assembly is in communication connection with the second control assembly. The wiring assembly is electrically connected to the bus in the first control assembly of the battery provided in the first aspect. The second control assembly is electrically connected to the first battery management unit in the first control assembly.

According to any of the above implementations of the second aspect of the present application, the second control assembly includes: a second case; a second battery management unit; and a communication module, where the communication module and the second battery management unit are located in the second case, and the communication module is electrically connected to the second battery management unit.

According to any of the above implementations of the second aspect of the present application, the second control assembly further includes a second networking module, the second networking module is located in the second case, and the second networking module is electrically connected to the second battery management unit.

According to any of the above implementations of the second aspect of the present application, the second control assembly further includes a second connector, and the second battery management unit is electrically connected to the first battery management units in one or more first control assemblies through the second connector.

According to any of the above implementations of the second aspect of the present application, the wiring assembly includes a first main loop input interface, a second main loop input interface, a first main loop output interface, a second main loop output interface, a first power line, and a second power line; the first main loop input interface is configured to be electrically connected to the first bus in the first control assembly, and the second main loop input interface is configured to be electrically connected to the second bus in the first control assembly; and the first power line is connected between the first main loop input interface and the first main loop output interface, and the second power line is connected between the second main loop input interface and the second main loop output interface.

According to any of the above implementations of the second aspect of the present application, the wiring assembly includes a plurality of first main loop input interfaces and a plurality of second main loop input interfaces; the plurality of first main loop input interfaces are respectively configured to be in one-to-one electrical connection to the first buses in the plurality of first control assemblies; the plurality of second main loop input interfaces are respectively configured to be in one-to-one electrical connection to the second buses in the plurality of first control assemblies; and the first power line is electrically connected to the plurality of first main loop input interfaces, and the second power line is electrically connected to the plurality of second main loop input interfaces.

According to any of the above implementations of the second aspect of the present application, the first main loop output interface includes a main positive loop interface, a direct current charging positive electrode interface, and a water-cooled high-voltage positive electrode interface; the second main loop output interface includes a main negative loop interface, a direct current charging negative electrode interface, and a water-cooled high-voltage negative electrode interface; the first power line includes a first branch, a second branch and a third branch connected in parallel, and the second power line includes a fourth branch, a fifth branch and a sixth branch connected in parallel; the first branch, the second branch and the third branch are in one-to-one electrical connection to the main positive loop interface, the direct current charging positive electrode interface and the water-cooled high-voltage positive electrode interface respectively; and the fourth branch, the fifth branch and the sixth branch are in one-to-one electrical connection to the main negative loop interface, the direct current charging negative electrode interface and the water-cooled high-voltage negative electrode interface respectively.

According to any of the above implementations of the second aspect of the present application, the wiring assembly further includes a first charging relay, a second charging relay, a water-cooled relay, a main negative relay, and a pre-charging relay; and the first charging relay is connected in series to the second branch, the water-cooled relay is connected in series to the third branch, the second charging relay is connected in series to the fifth branch, and the main negative relay and the pre-charging relay are connected in parallel to the fourth branch.

According to any of the above implementations of the second aspect of the present application, the wiring assembly further includes: a third case; and a second voltage sampling module, where the second voltage sampling module is located in the third case, the second voltage sampling module is electrically connected to the first power line and the second power line respectively, and the second voltage sampling module is in communication connection with the second battery management unit in the second control assembly.

According to a third aspect, an embodiment of the present application provides a topology framework. The topology framework includes: the battery provided in the first aspect; and the vehicle-mounted connecting apparatus provided in the second aspect. The vehicle-mounted connecting apparatus is electrically connected to the battery.

According to a fourth aspect, an embodiment of the present application provides an electrical device. The electrical device includes the topology framework provided in the third aspect.

### DESCRIPTION OF DRAWINGS

To more clearly describe the technical solutions in embodiments of the present application, the accompanying drawings to be used in the embodiments of the present application will be briefly introduced below. For those of ordinary skill in the art, other accompanying drawings may also be obtained based on these accompanying drawings without making creative work.
FIG. 1 is a schematic structural diagram of a battery in a related technology;
FIG. 2 is a schematic structural diagram of a battery provided in an embodiment of the present application;
FIG. 3 is another schematic structural diagram of a battery provided in an embodiment of the present application;
FIG. 4 is a schematic circuit diagram of a battery provided in an embodiment of the present application;
FIG. 5 is another schematic circuit diagram of a battery provided in an embodiment of the present application;
FIG. 6 is still another schematic circuit diagram of a battery provided in an embodiment of the present application;
FIG. 7 is yet another schematic circuit diagram of a battery provided in an embodiment of the present application;
FIG. 8 is still yet another schematic circuit diagram of a battery provided in an embodiment of the present application;
FIG. 9 is a schematic circuit diagram of a vehicle-mounted connecting apparatus provided in an embodiment of the present application;
FIG. 10 is another schematic circuit diagram of a vehicle-mounted connecting apparatus provided in an embodiment of the present application;
FIG. 11 is still another schematic circuit diagram of a vehicle-mounted connecting apparatus provided in an embodiment of the present application;
FIG. 12 is a schematic circuit diagram of a topology framework provided in an embodiment of the present application; and
FIG. 13 is a schematic flowchart of a topology framework provided in an embodiment of the present application during battery swapping.

The accompanying drawings may not be drawn in accordance with the actual scale.

### DETAILED DESCRIPTION

The features and exemplary embodiments of various aspects of the present application are described in detail below. In order to make the objectives, technical solutions and advantages of the present application more clear, the present application is further described in detail below with reference to accompanying drawings and specific embodiments. It should be understood that the specific embodiments described herein are merely used to explain the present application but are not intended to limit the present application. For those skilled in the art, the present application can be implemented without requiring some of these specific details. The following description of the embodiments is merely intended to provide a better understanding of the present application by illustrating examples of the present application.

It should be noted that relational terms such as "first" and "second" are only used to distinguish one entity or operation from another entity or operation, and do not necessarily require or imply existence of any actual relationship or sequence between these entities or operations. Further, the terms such as "comprising", "including" or any other variation thereof are intended to encompass non-exclusive inclusions, such that a process, a method, an article, or a device that includes a series of elements not only includes those elements, but also includes other elements that are not explicitly listed, or further includes elements that are inherent to such a process, a method, an article, or a device. In case of no more constraints, an element defined by the wording "comprise..." does not preclude the existence of additional identical elements in a process, a method, an article, or a device that includes the element.

It should be understood that the term "and/or" herein is only an association relationship describing associated objects, which means that there may be three relationships, for example, A and/or B may represent three situations: A exists alone, both A and B exist, and B exists alone. In addition, the character "/" herein generally means that there is an "or" relationship between associated objects therebefore and thereafter.

In the embodiments of the present application, the term "electrical connection" may refer to a direct electrical connection between two assemblies, or may refer to an electrical connection between two assemblies via one or more other assemblies.

Various modifications and variations can be made to the present application without departing from the spirit or scope of the present application, which will be apparent to those skilled in the art. Therefore, the present application is intended to cover any modifications and variations of the present application that fall within the scope of the corresponding claims (the claimed technical solutions) and equivalents thereof. It should be noted that without conflict, the implementations provided in the embodiments of the present application may be combined with each other.

Before describing the technical solutions provided in the embodiments of the present application, in order to facilitate understanding of the embodiments of the present application, the present application first specifically explains the problems existing in related technologies.

As a power supply component of an electric vehicle, a battery plays a decisive role in the range, cost and lifespan of the entire vehicle. However, at present, the degree of integration of an internal circuit of the battery is relatively low, and the cost is relatively high.

With the development of the science and technology, the battery swapping technology of vehicles has become one of development methods of the battery technology. For example, in battery swapping application scenarios, a battery (or battery pack) of a vehicle driven into a battery swapping station can be removed and replaced with a new battery from the battery swapping station. Therefore, the battery may also be referred to as a battery swapping cabinet or battery swapping box.

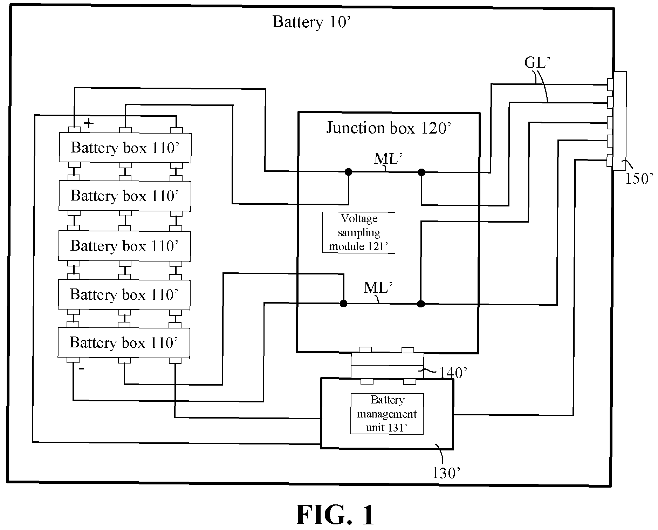

FIG. 1 is a schematic structural diagram of a battery in a related technology. As shown in FIG. 1, in the related technology, a battery box 110', a junction box 120' and a control box 130' may be disposed in a battery (or battery swapping cabinet) 10'. Batteries may be disposed in the battery box 110'. A bus ML' and a voltage sampling module 121' may be disposed in the junction box 120'. Exemplarily, the voltage sampling module 121' may include a high voltage board (HVB). The bus ML' in the junction box 120' may be electrically connected to the battery box 110'. In addition, a relay may also be disposed in the junction box 120', and the relay is connected to the bus ML'. For the sake of simplicity, the relay is not shown in FIG. 1. The control box 130' may be provided with a battery management unit (BMU) 131'. The junction box 120' and the control box 130' may be connected through a connector 140'.

It can be seen that the battery 10' in the related technology is not only provided with the junction box 120', but also provided with the control box 130'. The bus ML' and the voltage sampling module 121' are disposed in the junction box 120', and the battery management unit 131' is disposed in the control box 130'. An internal circuit of the battery 10' has a relatively low degree of integration and requires more and/or longer wiring harnesses, resulting in relatively high wiring harness cost. In addition, the junction box 120' and the control box 130' need to communicate through the connector 140', thereby increasing the cost of the connector and the risk of communication failure.

In view of the above research findings of inventors, embodiments of the present application provide a battery, a vehicle-mounted connecting apparatus, a topology framework, and an electrical device, which can solve at least one of the above technical problems existing in related technologies.

The technical concepts of the embodiments of the present application are: on the one hand, the bus, the first battery management unit and the first voltage sampling module are all integrated in the first case of the first control assembly, thereby helping to reduce the wiring harness length between the first voltage sampling module and the first battery management unit, and/or reduce the wiring harness length between the first voltage sampling module and the bus to reduce the wiring harness cost; and on the other hand, since the first battery management unit and the first voltage sampling module are both integrated in the first case of the first control assembly, the number of connectors between the first voltage sampling module and the first battery management unit can be reduced, so as to save the cost of using connectors, and help to reduce the risk of communication failure. Furthermore, by improving the degree of integration of the first control assembly in the battery, the degree of integration of the battery is improved, thereby helping to reduce the volume of the battery and the space occupied by the battery.

A battery provided in an embodiment of the present application is first introduced below.

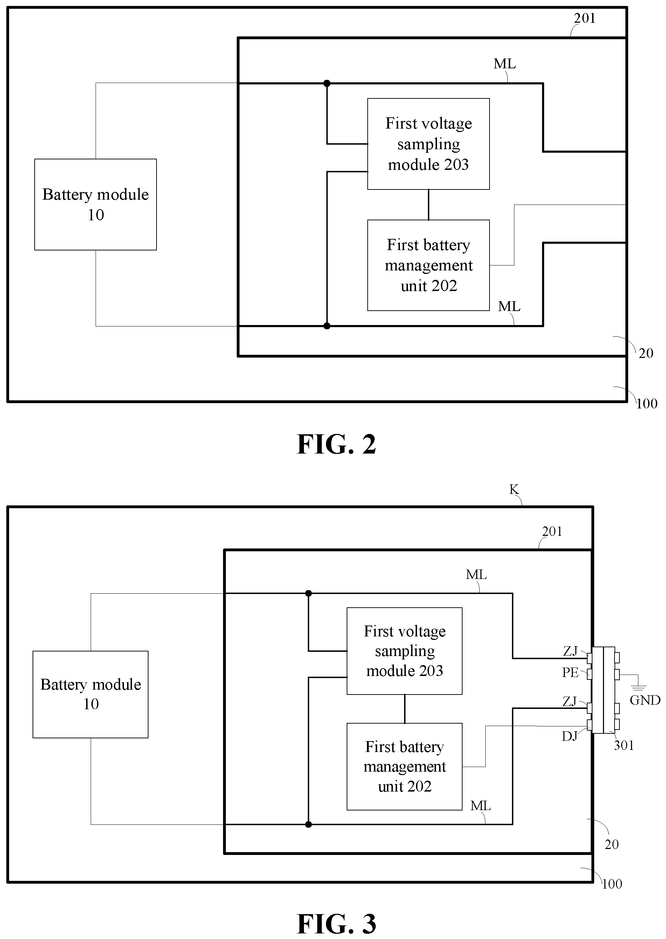

FIG. 2 is a schematic structural diagram of a battery provided in an embodiment of the present application. As shown in FIG. 2, a battery 100 provided in this embodiment of the present application may include a battery module 10 and a first control assembly 20, and the first control assembly 20 may be electrically connected to the battery module 10. The battery 100 may also be referred to as a battery pack. The battery 100 may include one or more battery modules 10. The number of battery modules 10 can be flexibly adjusted according to actual situations, and is not limited in the present application. One battery module 10 may include a plurality of battery cells connected in series, in parallel or in series and parallel. The series-parallel connection means that a plurality of battery cells are connected both in series and in parallel. The first control assembly 20 may include a first case 201, a bus ML, a first battery management unit 202, and a first voltage sampling module 203. The first battery management unit 202 may be referred to as a slave battery management unit (SBMU). The first battery management unit 202 may be configured to manage the first control assembly, for example, receive data such as the voltage, current and/or temperature of the battery, calculate the state of charge (SOC) of the battery and the state of health (SOH) of the battery, and complete the pre-charging and charging/discharging management of the battery.

The bus ML, the first battery management unit 202 and the first voltage sampling module 203 may be located in the first case 201, that is, located in a chamber (or space) formed by the first case 201.

The first voltage sampling module 203 may be electrically connected to the bus ML and the first battery management unit 202 respectively. The first voltage sampling module 203 may be mainly configured to collect the voltage of the bus ML and perform insulation detection. The first voltage sampling module 203 may include a high voltage board (HVB).

According to the battery provided in this embodiment of the present application, on the one hand, the bus, the first battery management unit and the first voltage sampling module are all integrated in the first case of the first control assembly, thereby helping to reduce the wiring harness length between the first voltage sampling module and the first battery management unit, and/or reduce the wiring harness length between the first voltage sampling module and the bus to reduce the wiring harness cost; and on the other hand, since the first battery management unit and the first voltage sampling module are both integrated in the first case of the first control assembly, the number of connectors between the first voltage sampling module and the first battery management unit can be reduced, so as to save the cost of using connectors, and help to reduce the risk of communication failure. Furthermore, by improving the degree of integration of the first control assembly in the battery, the degree of integration of the battery is improved, thereby helping to reduce the volume of the first control assembly and the space occupied by the first control assembly.

Still referring to FIG. 1, in the related technology, the bus ML' of the junction box 120' and a conversion connector 150' need to be connected through a high-voltage line GL', thereby further increasing the wiring harness cost.

FIG. 3 is another schematic structural diagram of a battery provided in an embodiment of the present application. As shown in FIG. 3, according to some embodiments of the present application, optionally, the battery module 10 may be electrically connected to the bus ML. The first control assembly 20 may also include a first connector 301. The first control assembly 20 may be electrically connected to another device (such as a charging device or a vehicle-mounted connecting apparatus hereinafter) through the first connector 301, for example. Each first control assembly 20 may have only one first connector 301. Based on the first connector 301, charging at a battery swapping station and discharging outside the station can be performed. The bus ML and the first battery management unit 202 may be electrically connected to the first connector 301.

In some examples, the first connector 301 may include a quick-change connector.

As shown in FIG. 3, according to some embodiments of the present application, optionally, the first connector 301 may be disposed on the first case 201. The present application does not limit a connection manner between the first connector 301 and the first case 201. For example, the first connector 301 may be fixedly connected or detachably connected to the first case 201. That is, the first connector 301 may also be integrated on the first case 201.

In this way, the bus ML may be directly connected to the first connector 301 to reduce the high-voltage line GL' between the bus ML' and the conversion connector 150' as shown in FIG. 1, thereby further reducing the cost of the first control assembly 20.

As shown in FIG. 3, according to some embodiments of the present application, optionally, at least one side of the first case 201 of the first control assembly 20 (such as the side where the first connector 301 is located) may be connected to a case K of the battery 100, so that the first connector 301 may be electrically connected to another device (such as a charging device or a vehicle-mounted connecting apparatus hereinafter).

As shown in FIG. 3, according to some embodiments of the present application, optionally, the first connector 301 may include a main loop interface ZJ, a low-voltage interface DJ, and a grounding interface PE.

The main loop interface ZJ may be electrically connected to the bus ML, the low-voltage interface DJ may be electrically connected to the first battery management unit 202, and the grounding interface PE may be electrically connected to a grounding terminal GND. Exemplarily, the grounding terminal GND includes, but is not limited to, the ground of an entire vehicle or the ground of a charger in a battery swapping station. In some examples, the main loop interface ZJ and the low-voltage interface DJ may both include one or more interfaces, and the present application does not limit this.

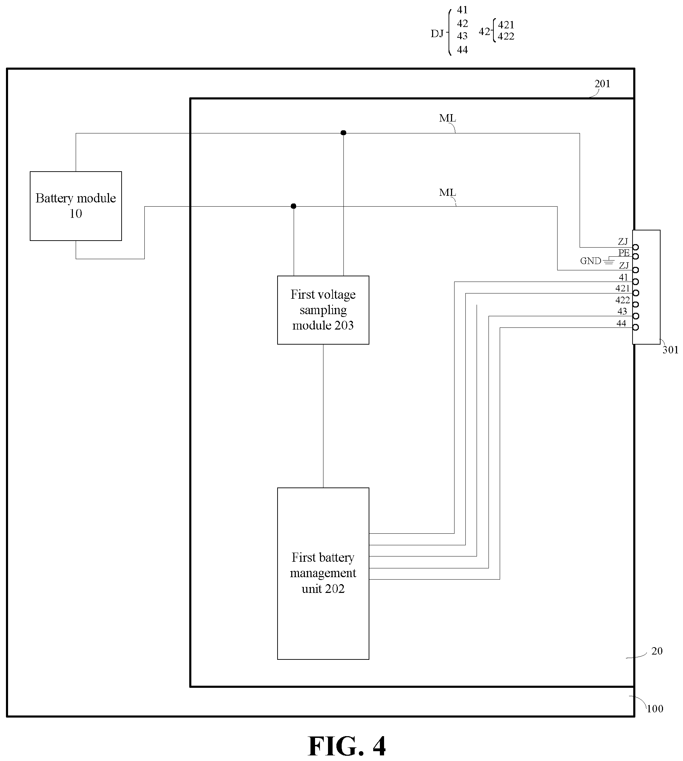

FIG. 4 is a schematic circuit diagram of a battery provided in an embodiment of the present application. As shown in FIG. 4, according to some embodiments of the present application, optionally, the low-voltage interface DJ may include a communication interface 41. The communication interface 41 may be electrically connected to the first battery management unit 202. The first battery management unit 202 may communicate with another device through the communication interface 41 of the first connector 301. The present application does not limit the type of the communication interface 41. For example, in some examples, the communication interface 41 may include a controller area network (CAN) communication interface, such as a CAN_H communication interface and a CAN_L communication interface. The first connector 301 may include one or more communication interfaces 41. The number of communication interfaces 41 can be flexibly adjusted according to actual situations, and is not limited in the present application.

As shown in FIG. 4, according to some embodiments of the present application, optionally, the low-voltage interface DJ may include a first connector connection state detection interface 42. The first connector connection state detection interface 42 may be electrically connected to the first battery management unit 202. The first battery management unit 202 can detect a connection state of the first connector 301 through the first connector connection state detection interface 42.

For example, in some examples, the first connector connection state detection interface 42 may include a connection state detection input interface 421 and a connection state detection output interface 422. The connection state detection input interface 421 and the connection state detection output interface 422 may be electrically connected to the first battery management unit 202. The first battery management unit 202 can provide a voltage signal with a first preset voltage value to the connection state detection input interface 421, and receive a voltage signal fed back from the connection state detection output interface 422. When the voltage value of the voltage signal fed back from the connection state detection output interface 422 is within a preset voltage range, it is determined that the first connector 301 has been connected to another device. When the voltage value of the voltage signal fed back from the connection state detection output interface 422 is not within a preset voltage range, it is determined that the first connector 301 is not connected to another device. The first preset voltage value and the preset voltage range can be flexibly adjusted according to actual situations, and are not limited in the present application.

As shown in FIG. 4, according to some embodiments of the present application, optionally, the low-voltage interface DJ may include a first connector temperature state detection interface 43. The first connector temperature state detection interface 43 may be electrically connected to the first battery management unit 202. The first battery management unit 202 can detect a temperature state of the first connector 301 through the first connector temperature state detection interface 43. For example, the first battery management unit 202 can receive a signal reflecting the temperature of the first connector fed back from the first connector temperature state detection interface 43, and by processing the signal, the temperature of the first connector 301 can be obtained. In some examples, an over-temperature warning can be issued when the temperature of the first connector 301 exceeds a preset temperature threshold. The preset temperature threshold can be flexibly adjusted according to actual situations, and is not limited in the present application.

As shown in FIG. 4, according to some embodiments of the present application, optionally, the low-voltage interface DJ may include a position recognition signal interface 44, and the position recognition signal interface 44 may be electrically connected to the first battery management unit 202. The first battery management unit 202 can determine the position of the battery 100 or the vehicle where the battery 100 is located through the position recognition signal interface 44. For example, in some examples, when the first battery management unit 202 detects that a first level is fed back from the position recognition signal interface 44, it can be determined that the battery 100 or the vehicle where the battery 100 is located is in the battery swapping station. When the first battery management unit 202 detects that a second level is fed back from the position recognition signal interface 44, it can be determined that the battery 100 or the vehicle where the battery 100 is located is not in the battery swapping station, that is, outside the battery swapping station. Exemplarily, the first level may include a high level, and the second level may include a low level.

It should be noted that FIG. 4 illustrates a low-voltage interface DJ including a communication interface 41, a first connector connection state detection interface 42, a first connector temperature state detection interface 43, and a position recognition signal interface 44 as an example. In other embodiments, the low-voltage interface DJ may also include any one or more of the communication interface 41, the first connector connection state detection interface 42, the first connector temperature state detection interface 43, and the position recognition signal interface 44.

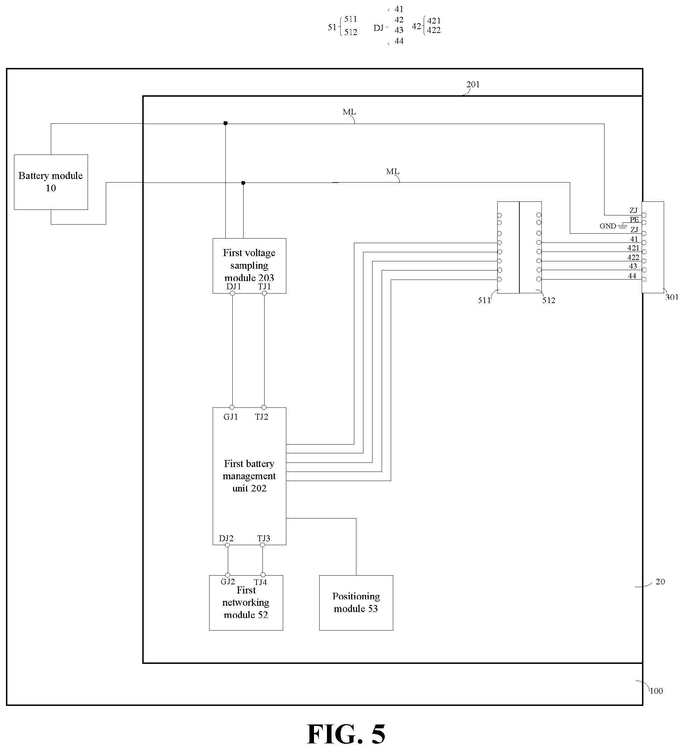

FIG. 5 is another schematic circuit diagram of a battery provided in an embodiment of the present application. As shown in FIG. 5, according to some embodiments of the present application, optionally, the first control assembly 20 may also include an adapter connector 51. The first battery management unit 202 may be electrically connected to the first connector 301 through the adapter connector 51.

As shown in FIG. 5, in some specific embodiments, optionally, the adapter connector 51 may include a first adapter connector 511 and a second adapter connector 512, and the first adapter connector 511 may be electrically connected to the second adapter connector 512. Both the first adapter connector 511 and the second adapter connector 512 may include a plurality of interfaces. The plurality of interfaces of the first adapter connector 511 may be in one-to-one electrical connection to the plurality of interfaces of the second adapter connector 512.

In some embodiments, the first adapter connector 511 may be adapted to the second adapter connector 512. For example, in some examples, the first adapter connector 511 may be a male connector, and the second adapter connector 512 may be a female connector. In some other examples, the first adapter connector 511 may be a female connector, and the second adapter connector 512 may be a male connector.

The first battery management unit 202 may be electrically connected to the first adapter connector 511, and the first connector 301 may be electrically connected to the second adapter connector 512.

In this way, by setting the first adapter connector 511 to be electrically connected to the first battery management unit 202 and the second adapter connector 512 to be electrically connected to the first connector 301, the first battery management unit 202 can be electrically connected to the first connector 301 by plugging in the first adapter connector 511 and the second adapter connector 512, thereby facilitating the disassembly and assembly.

As shown in FIG. 5, according to some embodiments of the present application, optionally, the first voltage sampling module 203 may include a first power interface DJ1 and a first communication interface TJ1, and the first battery management unit 202 may include a first power supply interface GJ1 and a second communication interface TJ2. The first power interface DJ1 may be electrically connected to the first power supply interface GJ1, and the first communication interface TJ1 may be electrically connected to the second communication interface TJ2. The first battery management unit 202 can supply power to the first power interface DJ1 of the first voltage sampling module 203 through the first power supply interface GJ1. The first battery management unit 202 can communicate with the first voltage sampling module 203 through the first communication interface TJ1 and the second communication interface TJ2. The present application does not limit the types of the first communication interface TJ1 and the second communication interface TJ2. For example, in some examples, both the first communication interface TJ1 and the second communication interface TJ2 may be a CAN communication interface, such as a CAN_H communication interface and a CAN_L communication interface.

As shown in FIG. 5, according to some embodiments of the present application, optionally, the first control assembly 20 may also include a first networking module 52, the first networking module 52 may be located in the first case 201, and the first networking module 52 may be electrically connected to the first battery management unit 202. The first networking module 52 may be configured to communicate with a cloud platform. For example, in some examples, the first networking module 52 may include a vehicle networking device (RDB).

In this way, the networking between the first control assembly 20 and the cloud platform can be achieved through the first networking module 52. On the other hand, since the first networking module 52 is integrated in the first case 201, it helps to reduce the wiring harness length between the first networking module 52 and the first battery management unit 202, so as to reduce the wiring harness cost. Furthermore, the space inside the first case 201 can be fully utilized to provide the first networking module 52, so as to help to reduce the volume of the first control assembly and the space occupied by the first control assembly, thereby reducing the volume of the battery and the space occupied by the battery.

As shown in FIG. 5, according to some embodiments of the present application, optionally, the first networking module 52 may include a second power interface DJ2 and a third communication interface TJ3, and the first battery management unit 202 may include a second power supply interface GJ2 and a fourth communication interface TJ4. The second power interface DJ2 may be electrically connected to the second power supply interface GJ2, and the third communication interface TJ3 may be electrically connected to the fourth communication interface TJ4.

The first battery management unit 202 can supply power to the second power interface DJ2 of the first networking module 52 through the second power supply interface GJ2. The first battery management unit 202 can communicate with the first networking module 52 through the third communication interface TJ3 and the fourth communication interface TJ4. The present application does not limit the types of the third communication interface TJ3 and the fourth communication interface TJ4. For example, in some examples, both the third communication interface TJ3 and the fourth communication interface TJ4 may be a CAN communication interface, such as a CAN_H communication interface and a CAN_L communication interface.

As shown in FIG. 5, according to some embodiments of the present application, optionally, the first control assembly 20 may also include a positioning module 53, the positioning module 53 may be located in the first case 201, and the positioning module 53 may be electrically connected to the first battery management unit 202. The positioning module 53 may be configured to determine the position of the battery 100 to achieve the positioning of the battery 100. For example, in some examples, the positioning module 53 may include a global positioning system (GPS) module.

In this way, the positioning of the battery 100 can be achieved by the positioning module 53. On the other hand, since the positioning module 53 is integrated in the first case 201, it helps to reduce the wiring harness length between the positioning module 53 and the first battery management unit 202, so as to reduce the wiring harness cost. Furthermore, the space inside the first case 201 can be fully utilized to provide the positioning module 53, so as to help to reduce the volume of the first control assembly and the space occupied by the first control assembly, thereby reducing the volume of the battery and the space occupied by the battery.

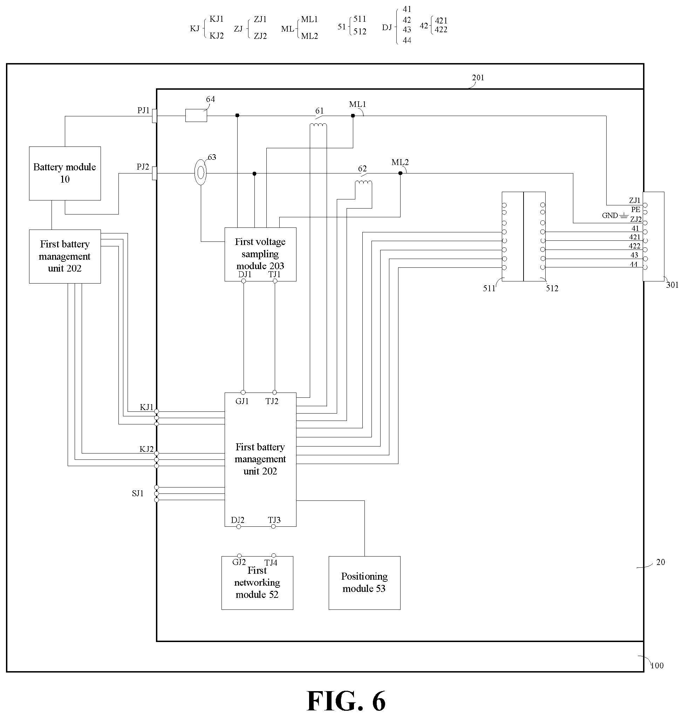

FIG. 6 is still another schematic circuit diagram of a battery provided in an embodiment of the present application. As shown in FIG. 6, according to some embodiments of the present application, optionally, the first control assembly 20 may also include a first battery connection interface PJ1 and a second battery connection interface PJ2.

The first battery connection interface PJ1 may be electrically connected to a first electrode of the battery module 10, and the second battery connection interface PJ2 may be electrically connected to a second electrode of the battery module 10. Exemplarily, the first electrode of the battery module 10 may be a positive electrode of the battery module 10, and the second electrode of the battery module 10 may be a negative electrode of the battery module 10. FIG. 6 illustrates a battery 100 including a battery module 10 as an example.

The bus ML includes a first bus ML1 and a second bus ML2, the first bus ML1 may be electrically connected to the first battery connection interface PJ1, and the second bus ML2 may be electrically connected to the second battery connection interface PJ2.

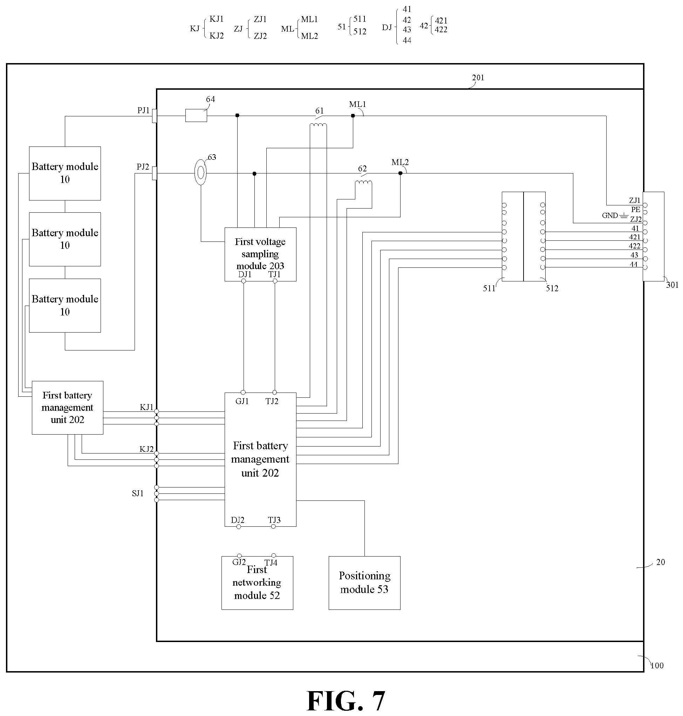

FIG. 7 is yet another schematic circuit diagram of a battery provided in an embodiment of the present application. As shown in FIG. 7, according to some other embodiments of the present application, optionally, the battery 100 includes N battery modules 10, the N battery modules 10 may be connected in series, and N is an integer greater than 1. The value of N can be flexibly adjusted according to actual situations, and is not limited in the present application. The number of battery modules 10 shown in FIG. 7 is merely illustrative and does not constitute a limitation on the present application. The first battery connection interface PJ1 may be electrically connected to a first electrode of the first battery module 10, and the second battery connection interface PJ2 may be electrically connected to a second electrode of the Nth battery module 10.

In this way, the battery 100 includes N battery modules 10, and the N battery modules 10 are connected in series, thereby increasing the output voltage and output power of the battery 100, and helping to meet the power needs of vehicles and other electrical devices.

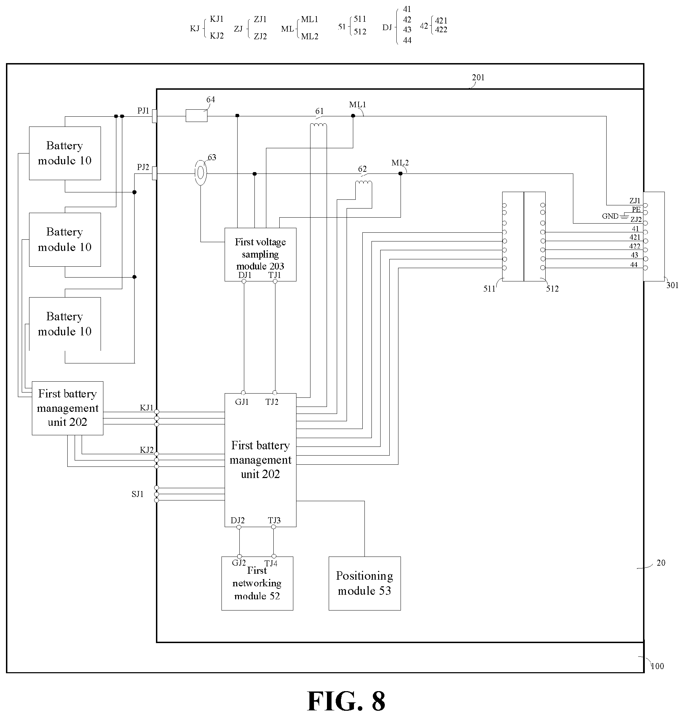

FIG. 8 is still yet another schematic circuit diagram of a battery provided in an embodiment of the present application. As shown in FIG. 8, according to some other embodiments of the present application, optionally, the battery 100 includes N battery modules 10, the N battery modules 10 may be connected in parallel, and N is an integer greater than 1. The value of N can be flexibly adjusted according to actual situations, and is not limited in the present application. The number of battery modules 10 shown in FIG. 8 is merely illustrative and does not constitute a limitation on the present application.

The first battery connection interface PJ1 may be electrically connected to first electrodes of the N battery modules 10, and the second battery connection interface PJ2 may be electrically connected to second electrodes of the N battery modules 10.

In this way, the battery 100 includes N battery modules 10, and the N battery modules 10 are connected in parallel, thereby increasing the output current and output power of the battery 100, and helping to meet the power needs of vehicles and other electrical devices.

As shown in FIG. 6, FIG. 7 or FIG. 8, according to some embodiments of the present application, optionally, the first control assembly 20 may also include a first main loop relay 61 and a second main loop relay 62, and the first main loop relay 61 and the second main loop relay 62 may be located in the first case 201.

The main loop interface ZJ of the first connector 301 may include a first main loop interface ZJ1 and a second main loop interface ZJ2.

The first bus ML1 and the first main loop relay 61 may be connected between the first battery connection interface PJ1 and the first main loop interface ZJ1, and the second bus ML2 and the second main loop relay 62 may be connected between the second battery connection interface PJ2 and the second main loop interface ZJ2. The first bus ML1 may be electrically connected to the positive electrode of the battery module through the first battery connection interface PJ1, and the first main loop relay 61 is connected in series to the first bus ML1. Therefore, the first main loop relay 61 may also be referred to as a first main positive relay. The second bus ML2 may be electrically connected to the negative electrode of the battery module through the second battery connection interface PJ2, and the second main loop relay 62 is connected in series to the second bus ML2. Therefore, the second main loop relay 62 may also be referred to as a first main negative relay.

In some examples, a control end (e.g., a coil) of the first main loop relay 61 and a control end (e.g., a coil) of the second main loop relay 62 may be electrically connected to the first battery management unit 202. The first battery management unit 202 may be configured to control the on/off state of the first main loop relay 61 and the second main loop relay 62.

As shown in FIG. 6, FIG. 7 or FIG. 8, according to some embodiments of the present application, optionally, the battery 100 may also include a cell supervision circuit (CSC) 120, and the cell supervision circuit 120 may be electrically connected to the battery module 10 and the first battery management unit 202 respectively. The cell supervision circuit 120 may be configured to measure data such as the voltage, current and/or temperature of battery cells in the battery module 10, and then transmit the measured data such as the voltage, current and/or temperature of battery cells in the battery module 10 to the first battery management unit 202.

It should be noted that the battery 100 may include one or more cell supervision circuits 120. The number of cell supervision circuits 120 can be flexibly adjusted according to actual situations, and is not limited in the present application.

According to some embodiments of the present application, optionally, the first control assembly 20 may also include a battery monitoring interface KJ, and the cell supervision circuit 120 may be electrically connected to the first battery management unit 202 through the battery monitoring interface KJ. The cell supervision circuit 120 may transmit the measured data such as the voltage, current and/or temperature of battery cells in the battery module 10 to the first battery management unit 202 through the battery monitoring interface KJ. In some examples, the battery monitoring interface KJ may include a battery monitoring input interface KJ1 and a battery monitoring output interface KJ2. The battery monitoring input interface KJ1 may be configured to be electrically connected to an output end of the cell supervision circuit 120, and the battery monitoring output interface KJ2 may be configured to be electrically connected to an input end of the cell supervision circuit 120. Both the battery monitoring input interface KJ1 and the battery monitoring output interface KJ2 may include at least one communication interface and a power supply interface. The communication interface may be configured to achieve the communication between the first battery management unit 202 and the cell supervision circuit 120, and the power supply interface may be configured to supply power to the cell supervision circuit 120.

In this way, by providing the battery monitoring interface KJ, the first battery management unit 202 can obtain data such as the voltage, current and/or temperature of battery cells in the battery module 10, collected by the cell supervision circuit 120, so as to monitor the state of the battery.

As shown in FIG. 6, according to some embodiments of the present application, optionally, the first control assembly 20 may also include a first debugging and diagnosing interface SJ1, and the first debugging and diagnosing interface SJ1 may be electrically connected to the first battery management unit 202. In some examples, the first debugging and diagnosing interface SJ1 may include a plurality of CAN communication interfaces, such as a CAN_H communication interface and a CAN_L communication interface. The first debugging and diagnosing interface SJ1 can be configured for debugging and diagnosing when the first control assembly 20 fails.

As shown in FIG. 6, according to some embodiments of the present application, optionally, the first control assembly 20 may also include a current sensor 63 and a fuse 64. The current sensor 63 may be connected in series to the second bus ML2, and the current sensor 63 may be in communication connection with the first voltage sampling module 203. The current sensor 63 may be configured to collect the current value of the second bus ML2 and send the current value of the second bus ML2 to the first voltage sampling module 203. The fuse 64 may be connected in series to the first bus ML1. When a current exceeds a specified value, the fuse 64 may be configured to fuse a fuse-element with heat generated by itself, thereby disconnecting a circuit to achieve overload protection.

Based on the first control assembly 20 provided in the above embodiments, correspondingly, the present application further provides a vehicle-mounted connecting apparatus.

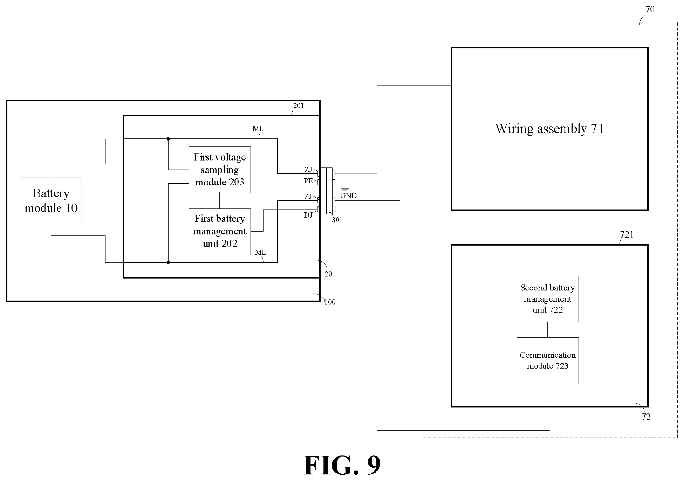

FIG. 9 is a schematic circuit diagram of a vehicle-mounted connecting apparatus provided in an embodiment of the present application. As shown in FIG. 9, the vehicle-mounted connecting apparatus 70 may include a wiring assembly 71 and a second control assembly 72, and the wiring assembly 71 is in communication connection with the second control assembly 72.

The wiring assembly 71 may be configured to be electrically connected to the bus ML in the first control assembly 20 of the battery 100. The second control assembly 72 may be configured to be electrically connected to the first battery management unit 202 in the first control assembly 20.

As shown in FIG. 9, according to some embodiments of the present application, optionally, the second control assembly 72 may include a second case 721, a second battery management unit 722, and a communication module 723. The second battery management unit 722 may be referred to as a main battery management unit (MBMU). The second battery management unit 722 may be configured to manage the operation of the entire battery system, receive data uploaded by the first battery management unit 202 for analysis and processing, and communicate and interact with a vehicle control unit (VCU).

The communication module 723 and the second battery management unit 722 may be located in the second case 721, and the communication module 723 may be electrically connected to the second battery management unit 722. For example, the communication module 723 may be configured to communicate with a terminal device (such as a mobile phone) of a user and receive instructions sent by the terminal device of the user. The present application does not limit the type of the communication module 723. For example, in some examples, the communication module 723 may include a Bluetooth module (BLE).

According to the vehicle-mounted connecting apparatus provided in this embodiment of the present application, on the one hand, the communication module 723 and the second battery management unit 722 are both integrated in the second case 721 of the second control assembly 72, thereby helping to reduce the wiring harness length between the communication module 723 and the second battery management unit 722 to reduce the wiring harness cost; and on the other hand, the degree of integration of the second control assembly 72 can be increased, thereby helping to reduce the volume of the second control assembly 72 and the vehicle-mounted connecting apparatus 70 and the space occupied by the second control assembly 72 and the vehicle-mounted connecting apparatus 70.

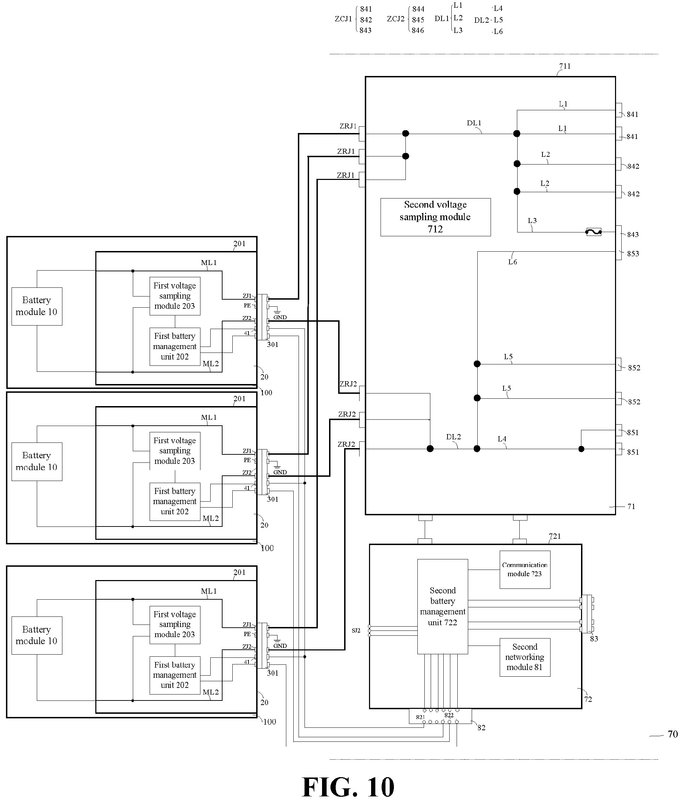

FIG. 10 is another schematic circuit diagram of a vehicle-mounted connecting apparatus provided in an embodiment of the present application. As shown in FIG. 10, according to some embodiments of the present application, optionally, the second control assembly 72 may also include a second networking module 81, the second networking module 81 may be located in the second case 721, and the second networking module 81 may be electrically connected to the second battery management unit 722.

The second networking module 81 may be configured to communicate with the cloud platform. For example, in some examples, the second networking module 81 may include a vehicle networking device (RDB).

In this way, the networking between the second control assembly 72 and the cloud platform can be achieved through the second networking module 81. On the other hand, since the second networking module 81 is integrated in the second case 721, it helps to reduce the wiring harness length between the second networking module 81 and the second battery management unit 722, so as to reduce the wiring harness cost. Furthermore, the space inside the second case 721 can be fully utilized to provide the second networking module 81, so as to help to reduce the volume of the second control assembly 72 and the space occupied by the second control assembly 72.

As shown in FIG. 10, according to some embodiments of the present application, optionally, the second control assembly 72 may also include a second connector 82, and the second battery management unit 722 may be electrically connected to the first battery management units 202 in one or more first control assemblies 20 through the second connector 82.

FIG. 10 illustrates the second battery management unit 722 electrically connected to the first battery management units 202 in a plurality of first control assemblies 20 through the second connector 82 as an example. In some examples, the second connector 82 may be a multi-in-one connector, that is, the second connector 82 may be electrically connected to the first connectors 301 of a plurality of first control assemblies 20. The second connector 82 may include a target communication interface 821 and a plurality of target power supply interfaces 822. The target communication interface 821 may be electrically connected to the communication interfaces 41 of the first connectors 301 of the plurality of first control assemblies 20, so as to achieve the communication between the first battery management unit 202 and the second battery management unit 722. Exemplarily, the target communication interface 821 may include a CAN communication interface. The plurality of target power supply interfaces 822 may be electrically connected to the power interfaces of the first connectors 301 of the plurality of first control assemblies 20 respectively, so as to supply power to each first battery management unit 202.

As shown in FIG. 10, according to some embodiments of the present application, optionally, the second control assembly 72 may also include a second debugging and diagnosing interface SJ2, and the second debugging and diagnosing interface SJ2 may be electrically connected to the second battery management unit 722. In some examples, the second debugging and diagnosing interface SJ2 may include a plurality of CAN communication interfaces, such as a CAN_H communication interface and a CAN_L communication interface. The second debugging and diagnosing interface SJ2 can be configured for debugging and diagnosing when the vehicle-mounted connecting apparatus fails.

As shown in FIG. 10, according to some embodiments of the present application, optionally, the second control assembly 72 may also include a third connector 83, and the third connector 83 may be configured to be electrically connected to a circuit (not shown in the figure) connected to the VCU on the vehicle, for example, to achieve the communication between the second battery management unit 722 and the VCU.

As shown in FIG. 10, according to some embodiments of the present application, optionally, the wiring assembly 71 may include a first main loop input interface ZRJ1, a second main loop input interface ZRJ2, a first main loop output interface ZCJ1, a second main loop output interface ZCJ2, a first power line DL1, and a second power line DL2.

The first main loop input interface ZRJ1 may be configured to be electrically connected to the first bus ML1 in the first control assembly 20, and the second main loop input interface ZRJ2 may be configured to be electrically connected to the second bus ML2 in the first control assembly 20. In some examples, the first main loop input interface ZRJ1l may be electrically connected to the first bus ML1 through the first main loop interface ZJ1 of the first connector 301, and the second main loop input interface ZRJ2 may be electrically connected to the second bus ML2 through the second main loop interface ZJ2 of the first connector 301.

The first power line DL1 may be connected between the first main loop input interface ZRJ1 and the first main loop output interface ZCJ1, and the second power line DL2 may be connected between the second main loop input interface ZRJ2 and the second main loop output interface ZCJ2.

As shown in FIG. 10, according to some embodiments of the present application, optionally, the wiring assembly 71 may include a plurality of first main loop input interfaces ZRJ1 and a plurality of second main loop input interfaces ZRJ2.

The plurality of first main loop input interfaces ZRJ1 may be respectively configured to be in one-to-one electrical connection to the first buses ML1 in the plurality of first control assemblies 20. For example, in some examples, the plurality of first main loop input interfaces ZRJ1 may be respectively configured to be in one-to-one electrical connection to the first main loop interfaces ZJ1 of the first connectors 301 in the plurality of first control assemblies 20.

The plurality of second main loop input interfaces ZRJ2 are respectively configured to be in one-to-one electrical connection to the second buses ML2 in the plurality of first control assemblies 20. For example, in some examples, the plurality of second main loop input interfaces ZRJ2 are respectively configured to be in one-to-one electrical connection to the second main loop interfaces ZJ2 of the first connectors 301 in the plurality of first control assemblies 20.

The first power line DL1 may be electrically connected to the plurality of first main loop input interfaces ZRJ1, and the second power line DL2 may be electrically connected to the plurality of second main loop input interfaces ZRJ2.

As shown in FIG. 10, according to some embodiments of the present application, optionally, the first main loop output interface ZCJ1 may include a main positive loop interface 841, a direct current charging positive electrode interface 842, and a water-cooled high-voltage positive electrode interface 843.

The second main loop output interface ZCJ2 may include a main negative loop interface 851, a direct current charging negative electrode interface 852, and a water-cooled high-voltage negative electrode interface 853.

The first power line DL1 includes a first branch L1, a second branch L2 and a third branch L3 connected in parallel, and the second power line DL2 includes a fourth branch L4, a fifth branch L5 and a sixth branch L6 connected in parallel.

The first branch L1, the second branch L2 and the third branch L3 may be in one-to-one electrical connection to the main positive loop interface 841, the direct current charging positive electrode interface 842 and the water-cooled high-voltage positive electrode interface 843 respectively.

The fourth branch L4, the fifth branch L5 and the sixth branch L6 may be in one-to-one electrical connection to the main negative loop interface 851, the direct current charging negative electrode interface 852 and the water-cooled high-voltage negative electrode interface 853 respectively.

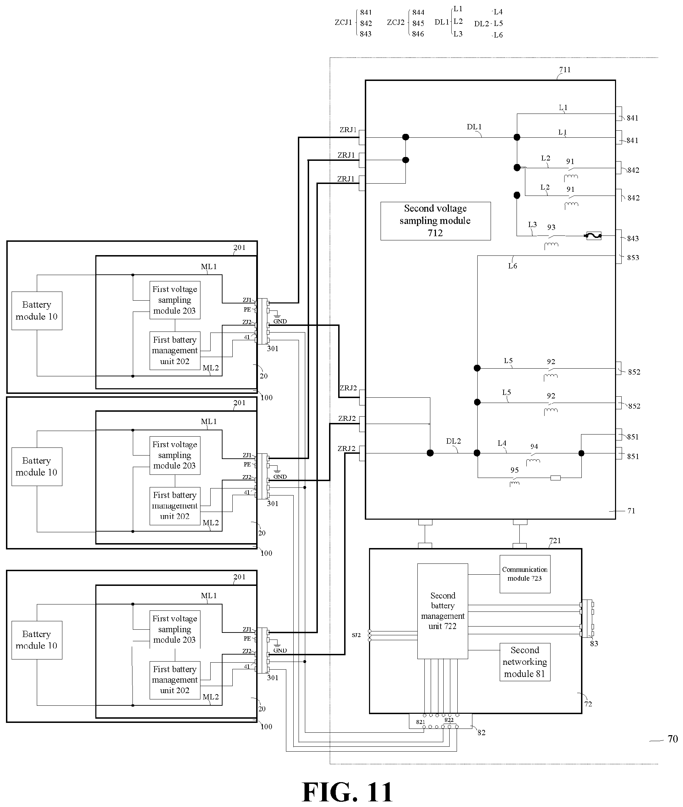

FIG. 11 is still another schematic circuit diagram of a vehicle-mounted connecting apparatus provided in an embodiment of the present application. As shown in FIG. 11, according to some embodiments of the present application, optionally, the wiring assembly 71 may also include a first charging relay 91, a second charging relay 92, a water-cooled relay 93, a main negative relay 94, and a pre-charging relay 95.

The first charging relay 91 may be connected in series to the second branch L2, the water-cooled relay 93 may be connected in series to the third branch L3, the second charging relay 92 may be connected in series to the fifth branch L5, and the main negative relay 94 and the pre-charging relay 95 may be connected in parallel to the fourth branch L4.

In some examples, a control end (e.g., a coil) of the first charging relay 91, a control end (e.g., a coil) of the second charging relay 92, a control end (e.g., a coil) of the water-cooled relay 93, a control end (e.g., a coil) of the main negative relay 94, and a control end (e.g., a coil) of the pre-charging relay 95 may be electrically connected to the second battery management unit 722. For the sake of simplicity, connecting wires between each relay and the second battery management unit 722 are not shown.

The second battery management unit 722 can control the on/off state of the first charging relay 91, the second charging relay 92, the water-cooled relay 93, the main negative relay 94 and the pre-charging relay 95.

It should be noted that as shown in FIG. 10, when other circuits on the vehicle are provided with the first charging relay, the second charging relay, the water-cooled relay, the main negative relay and the pre-charging relay, the wiring assembly 71 may also be not provided with the first charging relay, the second charging relay, the water-cooled relay, the main negative relay and the pre-charging relay, thereby reducing the number of relays, and saving the cost of relays.

When other circuits on the vehicle are provided with the first charging relay, the second charging relay, the water-cooled relay, the main negative relay and the pre-charging relay, the VCU can send the on/off state of the first charging relay, the second charging relay, the water-cooled relay, the main negative relay and the pre-charging relay to the second battery management unit 722, so that the second battery management unit 722 knows the on/off state of the first charging relay, the second charging relay, the water-cooled relay, the main negative relay and the pre-charging relay.

When the wiring assembly 71 is provided with the first charging relay 91, the second charging relay 92, the water-cooled relay 93, the main negative relay 94 and the pre-charging relay 95, the second battery management unit 722 can control the on/off state of the first charging relay 91, the second charging relay 92, the water-cooled relay 93, the main negative relay 94 and the pre-charging relay 95, and send the on/off state of the first charging relay 91, the second charging relay 92, the water-cooled relay 93, the main negative relay 94 and the pre-charging relay 95 to the VCU.

As shown in FIG. 11, according to some embodiments of the present application, optionally, the wiring assembly 71 may also include a third case 711 and a second voltage sampling module 712. The second voltage sampling module 712 may be located in the third case 711, the second voltage sampling module 712 may be electrically connected to the first power line DL1 and the second power line DL2 respectively, and the second voltage sampling module 712 may be in communication connection with the second battery management unit 722 in the second control assembly 72.

The second voltage sampling module 712 may be configured to collect the voltages of the first power line DL1 and the second power line DL2, and send the collected voltages of the first power line DL1 and the second power line DL2 to the second battery management unit 722, for example, for insulation detection. The second voltage sampling module 712 may include a high voltage board (HVB).

In this way, by providing the second voltage sampling module 712, voltage collection and insulation detection of the first power line DL1 and the second power line DL2 can be achieved. The second voltage sampling module 712 is disposed in the third case 711, so as to increase the degree of integration of the wiring assembly, thereby helping to reduce the volume of the wiring assembly and the space occupied by the wiring assembly.

As shown in FIG. 11, according to some embodiments of the present application, optionally, the first power line DL1, the second power line DL2, the first charging relay 91, the second charging relay 92, the water-cooled relay 93, the main negative relay 94 and the pre-charging relay 95 may be located in the third case 711.

Based on the first control assembly 20 provided in the above embodiments, correspondingly, the present application further provides a battery pack.

Based on the battery 100 and the vehicle-mounted connecting apparatus 70 provided in the above embodiments, correspondingly, the present application further provides a topology framework.

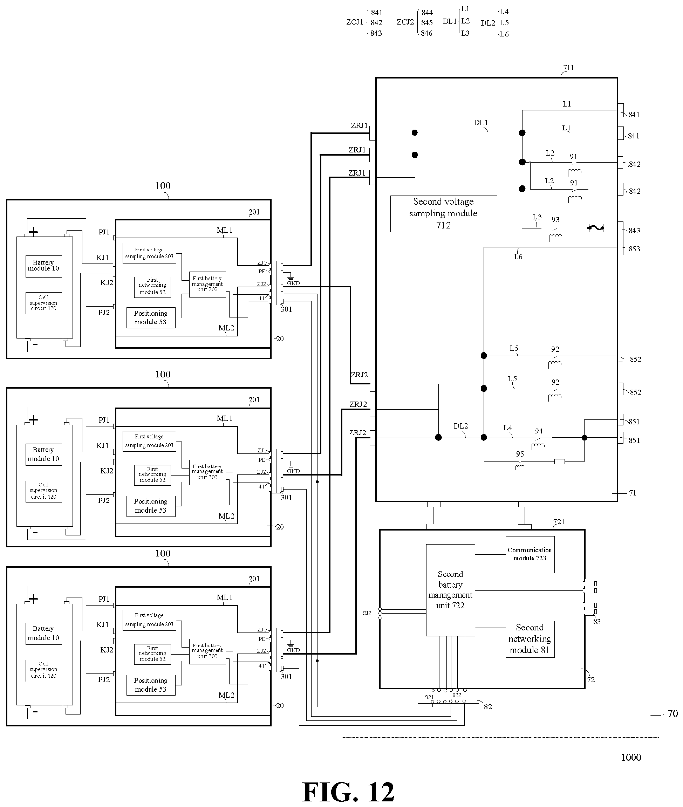

FIG. 12 is a schematic circuit diagram of a topology framework provided in an embodiment of the present application. As shown in FIG. 11, a topology framework 1000 provided in this embodiment of the present application may include a battery 100 and a vehicle-mounted connecting apparatus 70, and the vehicle-mounted connecting apparatus 70 is electrically connected to the battery 100.

The topology framework 1000 provided in this embodiment of the present application has the beneficial effects of the battery 100 and/or the vehicle-mounted connecting apparatus 70 provided in the embodiments of the present application. For details, reference may be made to the specific descriptions of the battery 100 and the vehicle-mounted connecting apparatus 70, which will not be repeated here in this embodiment.

It should be noted that the topology framework 1000 may include one or more batteries 100, and the number of batteries 100 can be flexibly adjusted according to actual situations. For example, in some examples, when the vehicle is a light or heavy-duty tractor, a dump truck or the like, the topology framework 1000 may include three or more batteries 100.

Because the battery 100 in this embodiment of the present application has a high degree of integration and a small volume, the space occupied by the topology framework 1000 in the vehicle can be reduced.

For ease of understanding, the working process of the topology framework 1000 provided in this embodiment of the present application in battery swapping, charging and discharging scenarios will be introduced below.

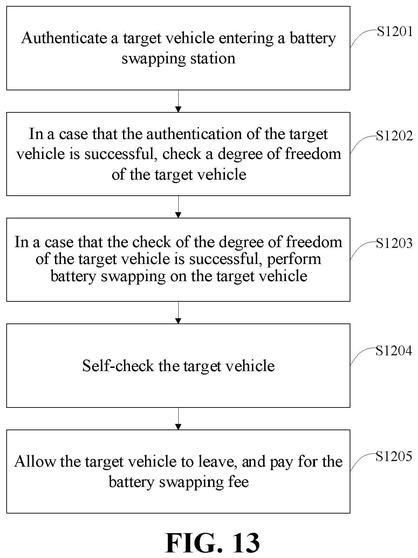

FIG. 13 is a schematic flowchart of a topology framework provided in an embodiment of the present application during battery swapping. As shown in FIG. 13, according to some embodiments of the present application, optionally, the working process of the topology framework provided in this embodiment of the present application during battery swapping may include the following steps S1201 to S1205.

S1201: A target vehicle entering a battery swapping station is authenticated.

S1202: In a case that the authentication of the target vehicle is successful, a degree of freedom of the target vehicle is checked.

S1203: In a case that the check of the degree of freedom of the target vehicle is successful, battery swapping is performed on the target vehicle.

S1204: The target vehicle is self-checked.

S1205: The target vehicle leaves, and the battery swapping fee is paid.

The specific process of each of the above steps will be introduced below.

S1201: The process of authenticating the target vehicle entering the battery swapping station may specifically include the following steps 1 to 5.

Step 1: The battery swapping station obtains the license plate number of the target vehicle and sends the license plate number of the target vehicle to a cloud platform.

Step 2: The cloud platform checks the validity of the license plate number of the target vehicle, and after the check is successful, the cloud platform sends the mac address of the second battery management unit 722 of the target vehicle to the battery swapping station.

Step 3: The battery swapping station establishes communication between the battery swapping station and the second battery management unit 722 of the target vehicle according to the mac address of the second battery management unit 722 of the target vehicle.

Step 4: The second battery management unit 722 of the target vehicle sends the vehicle information and battery pack information of the target vehicle to the battery swapping station.

Step 5: The battery swapping station checks the vehicle information and battery information of the target vehicle, and after the check is successful, an entrance gate is opened to allow the target vehicle to enter a battery swapping position.

S1202: In a case that the authentication of the target vehicle is successful, the process of checking the degree of freedom of the target vehicle specifically may include the following steps 6 to 8.

Step 6: After the target vehicle enters the battery swapping position, the degree of freedom of the vehicle is adjusted according to voice prompts.

Step 7: The second battery management unit 722 of the target vehicle sends the information of the degree of freedom of the vehicle to the battery swapping station.

Step 8: The battery swapping station checks the degree of freedom of the target vehicle according to the received information of the degree of freedom of the vehicle. In some examples, the check of the degree of freedom may include detecting whether a vehicle door is closed, whether a steering wheel is straightened, whether a vehicle is in a neutral (N) gear, whether a hand brake is released, and whether a brake pedal is released.

S1203: In a case that the check of the degree of freedom of the target vehicle is successful, the process of performing battery swapping on the target vehicle may include the following steps 9 to 12.

Step 9: The cloud platform receives a battery swapping instruction sent by the terminal device of the user, and sends the battery swapping instruction to the battery swapping station.

Step 10: The battery swapping station requests the vehicle to release the high voltage and prohibits the high voltage from being applied, while simultaneously performing vehicle position calibration.

Step 11: After the high voltage of the vehicle is released, battery swapping preparation is performed.

Step 12: After the battery swapping preparation of the vehicle and position calibration are completed, the battery of the target vehicle is replaced.

S1204: The process of self-checking the target vehicle may include the following steps 13 to 14.

Step 13: The battery swapping station sends a vehicle self-checking request to the target vehicle to allow applying a high voltage to the target vehicle.

Step 14: The target vehicle is self-checked.

S1205: The process that the target vehicle leaves and the battery swapping fee is paid may include the following steps 15 to 20.

Step 15: The Bluetooth connection between the battery swapping station and the second battery management unit 722 of the target vehicle is disconnected.

Step 16: The battery swapping station sends a battery swapping result to the cloud platform.

Step 17: The cloud platform generates an order and sends the order to the terminal device of the user.

Step 18: The user pays the fee using the terminal device.

Step 19: The battery swapping station opens an exit gate to allow the target vehicle to leave a battery swapping channel.

Step 20: The target vehicle leaves the battery swapping channel.

In a charging scenario, the first battery management unit 202 can control the first main loop relay 61 and the second main loop relay 62 to be closed, so as to complete the high voltage applying action of the battery 100. Then, after detecting that all the batteries 100 connected to the second battery management unit 722 complete the high voltage applying action, the second battery management unit 722 controls the charging-related relays in the vehicle-mounted connecting apparatus 70 to be closed, so as to complete the high voltage applying action of the vehicle-mounted connecting apparatus 70.

In a discharging scenario, the high voltage applying action can be performed when the vehicle is started. The first battery management unit 202 can control the first main loop relay 61 and the second main loop relay 62 to be closed, so as to complete the high voltage applying action of the battery 100. Then, after detecting that all the batteries 100 connected to the second battery management unit 722 complete the high voltage applying action, the second battery management unit 722 controls the discharging-related relays in the vehicle-mounted connecting apparatus 70 to be closed, so as to complete the high voltage applying action of the vehicle-mounted connecting apparatus 70.

In the discharging scenario, the high voltage releasing action can be performed when the vehicle is stalled. The first battery management unit 202 can control the first main loop relay 61 and the second main loop relay 62 to be switched off, so as to complete the high voltage releasing action of the battery 100. Then, after detecting that all the batteries 100 connected to the second battery management unit 722 complete the high voltage releasing action, the second battery management unit 722 controls the discharging-related relays in the vehicle-mounted connecting apparatus 70 to be switched off, so as to complete the high voltage releasing action of the vehicle-mounted connecting apparatus 70.

Based on the topology framework 1000 provided in the above embodiments, the present application further provides an electrical device. The electrical device includes the topology framework 1000 provided in the above embodiments. In some specific embodiments, optionally, the electrical device may be a vehicle. The vehicle may be a fuel vehicle, a gas vehicle, or a new energy vehicle. The new energy vehicle may be an all-electric vehicle, a hybrid electric vehicle, an extended range electric vehicle, or the like.

It should be understood that the specific structures of the circuits provided in the accompanying drawings of the embodiments of the present application are only some examples, and are not intended to limit the present application. In addition, the above embodiments provided in the present application may be combined with each other without contradiction.

It should be noted that the embodiments in the specification are described in a progressive manner, the same and similar parts of the embodiments can be referred to each other, and each embodiment focuses on the differences from other embodiments. The embodiments described above according to the present application do not exhaustively describe all details, and the specific embodiments are not limited in the present application. Obviously, based on the above description, many modifications and changes can be made. These embodiments are selected and specifically described in the specification to better explain the principles and practical applications of the present application, so that those skilled in the art can make good use of the present application and modifications based on the present application. The present application is limited only by the claims and the full scope and equivalents thereof.

It should be understood by those skilled in the art that the above embodiments are exemplary and not restrictive. Different technical features appearing in different embodiments can be combined to achieve beneficial effects. Those skilled in the art should be able to understand and implement other variations of the disclosed embodiments based on the study of the accompanying drawings, specification and claims. In the claims, the term "comprising" does not exclude other structures; the number refers to "one" but does not exclude "a plurality of"; and the terms "first" and "second" are used to identify names rather than to indicate any particular order. Any reference numerals in the claims should not be construed as limiting the scope of protection. The fact that certain technical features appear in different dependent claims does not mean that these technical features cannot be combined to achieve beneficial effects.

## Claims

1. A battery, comprising a battery module and a first control assembly, the first control assembly being electrically connected to the battery module, and the first control assembly comprising:
a first case;
a bus;
a first battery management unit; and
a first voltage sampling module, wherein the bus, the first battery management unit and the first voltage sampling module are located in the first case, and the first voltage sampling module is electrically connected to the bus and the first battery management unit respectively.

2. The battery according to claim 1, wherein the battery module is electrically connected to the bus, the first control assembly further comprises a first connector, and the bus and the first battery management unit are electrically connected to the first connector.

3. The battery according to claim 2, wherein the first connector is disposed on the first case.

4. The battery according to claim 2, wherein the first connector comprises a main loop interface, a low-voltage interface, and a grounding interface; and
the main loop interface is electrically connected to the bus, the low-voltage interface is electrically connected to the first battery management unit, and the grounding interface is electrically connected to a grounding terminal.

5. The battery according to claim 4, wherein the low-voltage interface comprises at least one of a communication interface, a first connector connection state detection interface, a first connector temperature state detection interface, and a position recognition signal interface.

6. The battery according to any one of claims 2 to 5, wherein the first control assembly further comprises an adapter connector; and
the first battery management unit is electrically connected to the first connector through the adapter connector.

7. The battery according to claim 6, wherein the adapter connector comprises a first adapter connector and a second adapter connector, and the first adapter connector is electrically connected to the second adapter connector; and
the first battery management unit is electrically connected to the first adapter connector, and the first connector is electrically connected to the second adapter connector.

8. The battery according to any one of claims 1 to 7, wherein the first voltage sampling module comprises a first power interface and a first communication interface, and the first battery management unit comprises a first power supply interface and a second communication interface; and
the first power interface is electrically connected to the first power supply interface, and the first communication interface is electrically connected to the second communication interface.

9. The battery according to any one of claims 1 to 7, wherein the first control assembly further comprises a first networking module, the first networking module is located in the first case, and the first networking module is electrically connected to the first battery management unit.

10. The battery according to claim 9, wherein the first networking module comprises a second power interface and a third communication interface, and the first battery management unit comprises a second power supply interface and a fourth communication interface; and
the second power interface is electrically connected to the second power supply interface, and the third communication interface is electrically connected to the fourth communication interface.

11. The battery according to any one of claims 1 to 7, wherein the first control assembly further comprises a positioning module, the positioning module is located in the first case, and the positioning module is electrically connected to the first battery management unit.

12. The battery according to any one of claims 2 to 7, wherein the first control assembly further comprises a first battery connection interface and a second battery connection interface, the first battery connection interface is electrically connected to a first electrode of the battery module, and the second battery connection interface is electrically connected to a second electrode of the battery module; and
the bus comprises a first bus and a second bus, the first bus is electrically connected to the first battery connection interface, and the second bus is electrically connected to the second battery connection interface.

13. The battery according to claim 12, wherein the battery comprises N battery modules, the N battery modules are connected in series, and N is an integer greater than 1; and
the first battery connection interface is electrically connected to a first electrode of the first battery module, and the second battery connection interface is electrically connected to a second electrode of the Nth battery module.

14. The battery according to claim 12, wherein the battery comprises N battery modules, the N battery modules are connected in parallel, and N is an integer greater than 1; and
the first battery connection interface is electrically connected to first electrodes of the N battery modules, and the second battery connection interface is electrically connected to second electrodes of the N battery modules.

15. The battery according to any one of claims 12 to 14, wherein the first control assembly further comprises a first main loop relay and a second main loop relay, and the first main loop relay and the second main loop relay are located in the first case;
the main loop interface of the first connector comprises a first main loop interface and a second main loop interface; and
the first bus and the first main loop relay are connected between the first battery connection interface and the first main loop interface, and the second bus and the second main loop relay are connected between the second battery connection interface and the second main loop interface.

16. The battery according to any one of claims 1 to 15, wherein the battery further comprises a cell supervision circuit, and the cell supervision circuit is electrically connected to the battery module and the first battery management unit respectively.

17. The battery according to claim 16, wherein the first control assembly further comprises a battery monitoring interface, and the cell supervision circuit is electrically connected to the first battery management unit through the battery monitoring interface.

18. The battery according to any one of claims 1 to 17, wherein the first control assembly further comprises a first debugging and diagnosing interface, and the first debugging and diagnosing interface is electrically connected to the first battery management unit.

19. A vehicle-mounted connecting apparatus, comprising a wiring assembly and a second control assembly, wherein the wiring assembly is in communication connection with the second control assembly;
the wiring assembly is electrically connected to the bus in the first control assembly of the battery according to any one of claims 1 to 18; and
the second control assembly is electrically connected to the first battery management unit in the first control assembly.

20. The vehicle-mounted connecting apparatus according to claim 19, wherein the second control assembly comprises:
a second case;
a second battery management unit; and
a communication module, wherein the communication module and the second battery management unit are located in the second case, and the communication module is electrically connected to the second battery management unit.

21. The vehicle-mounted connecting apparatus according to claim 20, wherein the second control assembly further comprises a second networking module, the second networking module is located in the second case, and the second networking module is electrically connected to the second battery management unit.

22. The vehicle-mounted connecting apparatus according to claim 20 or 21, wherein the second control assembly further comprises a second connector, and the second battery management unit is electrically connected to the first battery management units in one or more first control assemblies through the second connector.

23. The vehicle-mounted connecting apparatus according to any one of claims 19 to 21, wherein the wiring assembly comprises a first main loop input interface, a second main loop input interface, a first main loop output interface, a second main loop output interface, a first power line, and a second power line;
the first main loop input interface is configured to be electrically connected to the first bus in the first control assembly, and the second main loop input interface is configured to be electrically connected to the second bus in the first control assembly; and
the first power line is connected between the first main loop input interface and the first main loop output interface, and the second power line is connected between the second main loop input interface and the second main loop output interface.

24. The vehicle-mounted connecting apparatus according to claim 23, wherein the wiring assembly comprises a plurality of first main loop input interfaces and a plurality of second main loop input interfaces;
the plurality of first main loop input interfaces are respectively configured to be in one-to-one electrical connection to the first buses in the plurality of first control assemblies;
the plurality of second main loop input interfaces are respectively configured to be in one-to-one electrical connection to the second buses in the plurality of first control assemblies; and
the first power line is electrically connected to the plurality of first main loop input interfaces, and the second power line is electrically connected to the plurality of second main loop input interfaces.

25. The vehicle-mounted connecting apparatus according to claim 23, wherein the first main loop output interface comprises a main positive loop interface, a direct current charging positive electrode interface, and a water-cooled high-voltage positive electrode interface;
the second main loop output interface comprises a main negative loop interface, a direct current charging negative electrode interface, and a water-cooled high-voltage negative electrode interface;
the first power line comprises a first branch, a second branch and a third branch connected in parallel, and the second power line comprises a fourth branch, a fifth branch and a sixth branch connected in parallel;
the first branch, the second branch and the third branch are in one-to-one electrical connection to the main positive loop interface, the direct current charging positive electrode interface and the water-cooled high-voltage positive electrode interface respectively; and
the fourth branch, the fifth branch and the sixth branch are in one-to-one electrical connection to the main negative loop interface, the direct current charging negative electrode interface and the water-cooled high-voltage negative electrode interface respectively.

26. The vehicle-mounted connecting apparatus according to claim 25, wherein the wiring assembly further comprises a first charging relay, a second charging relay, a water-cooled relay, a main negative relay, and a pre-charging relay; and
the first charging relay is connected in series to the second branch, the water-cooled relay is connected in series to the third branch, the second charging relay is connected in series to the fifth branch, and the main negative relay and the pre-charging relay are connected in parallel to the fourth branch.

27. The vehicle-mounted connecting apparatus according to claim 23, wherein the wiring assembly further comprises:
a third case; and
a second voltage sampling module, wherein the second voltage sampling module is located in the third case, the second voltage sampling module is electrically connected to the first power line and the second power line respectively, and the second voltage sampling module is in communication connection with the second battery management unit in the second control assembly.

28. A topology framework, comprising:
the battery according to any one of claims 1 to 18; and
the vehicle-mounted connecting apparatus according to any one of claims 19 to 27, wherein the vehicle-mounted connecting apparatus is electrically connected to the battery.

29. An electrical device, comprising the topology framework according to claim 28.
